# EUROPÄISCHE PATENTSCHRIFT

(11) **EP 2 356 320 B1**
(45) Veröffentlichungstag und Bekanntmachung des Hinweises auf die Patenterteilung: **19.09.2012**
(21) Anmeldenummer: 09759715.7
(22) Anmeldetag: 19.11.2009
(51) Int. Cl.: F01D 5/14, F04D 29/54

(54) **RINGDIFFUSOR FÜR EINE AXIALTURBOMASCHINE**
RING DIFFUSER FOR AN AXIAL TURBOMACHINE
DIFFUSEUR ANNULAIRE POUR TURBOMACHINE AXIALE

(30) Priorität: 05.12.2008 EP 08021216
(43) Veröffentlichungstag der Anmeldung: 17.08.2011
(60) Teilanmeldung: 11010204.3
(73) Patentinhaber: Siemens Aktiengesellschaft, 80333 München (DE)
(72) Erfinder: CORNELIUS, Christian, 45549 Sprockhövel (DE); KÜSTERS, Bernhard, Jupiter, Florida 33458 (US); WALTKE, Ulrich, 45468 Mülheim an der Ruhr (DE)
(86) Internationale Anmeldenummer: PCT/EP2009/065445
(87) Internationale Veröffentlichungsnummer: WO 2010/063583

(56) Entgegenhaltungen:
- EP-A- 0 410 924
- EP-A- 1 574 667
- GB-A- 2 079 399
- GB-A- 2 281 356
- US-A- 2 956 400
- US-A- 5 592 820
- US-A1- 2007 258 819
- US-A1- 2008 232 968

## Beschreibung

Die Erfindung betrifft einen Ringdiffusor für eine Axialturbomaschine, mit einer kreisförmigen Außenwand und einer dazu koaxialen kreisförmigen Innenwand, zwischen denen ein Diffusorkanal sich ringförmig entlang einer Axialerstreckung von einem einströmseitigen Ende zu einem ausströmungsseitgen Ende erstreckt, wobei die Innenwand und die Außenwand jeweils eine den Diffusorkanal begrenzende Wandfläche umfassen. Des Weiteren betrifft die Erfindung eine Anordnung für eine Axialturbomaschine, umfassend einen ringförmigen Strömungskanal, welcher von Wandflächen einer Außenwand und einer Innenwand begrenzt ist und zwischen denen zumindest ein von einem Medium durchströmbares Leitschaufelgitter vorgesehen ist. Schlussendlich betrifft die Erfindung auch eine Axialturbomaschine mit einer vorgenannten Anordnung.

Ringdiffusoren sind aus dem Stand der Technik bekannt und werden, wie in der EP 1 574 667 A1 angegeben, beispielsweise bei Gasturbinen eingesetzt. Die Gasturbinen dienen in aller Regel zur stationären Energieerzeugung oder als Antrieb von Flugzeugen, wobei der eingangs genannte Ringdiffusor häufig am Ausgang des Gasturbinenverdichters - kurz Verdichter genannt - vorgesehen ist, um die im Verdichter angesaugte und verdichtete Luft zu verzögern und deren kinetischen Energiegehalt in statischen Druck umzuwandeln. Üblicherweise ist der Verdichterausgangsdiffusor dabei von einer äußeren und einer dazu koaxial angeordneten ebenfalls kreisförmigen Innenwand gebildet, zwischen denen der ringförmige Diffusorkanal vorgesehen ist. Dabei divergiert der Diffusorkanal vom einströmseitigen Ende zum ausströmseitigen Ende.

Ein alternativer Gasturbinen-Diffusor ist beispielsweise aus der US 5,592,820 bekannt. Der darin offenbarte Diffusor setzt sich aus einer Vielzahl im Querschnitt quadratischer Rohre zusammen, die auf einem Kreis liegend angeordnet sind. Einströmseitig enden die Rohre auf einem identischen Radius, wohingegen ausstromseitig die Rohre auf unterschiedlichen Radien enden, was zu einer um eine Kreislinie mehrfach pendelnden Verteilung der Rohrenden führt. Mit Hilfe dieser Anordnung soll die vom Verdichter bereitgestellte Luft vergleichsweise einfach zu unterschiedlichen Bauteilen geleitet werden.

Daneben ist ein Ringdiffusor für einen katalytischen Wandler eines Automobiles aus der EP 0 410 924 A2 bekannt, welcher ausgangsseitig eine in Umfangsrichtung wellenförmige Ummantelung aufweist, um an dieser Stelle evtl. auftretende Ablösungen der Strömungen zu verhindern.

Bei Gasturbinen fällt bekanntermaßen der Ausgang des zumeist in axialer Bauart ausgestalteten Verdichters mit dem Eingang des Ringdiffusors zusammen. Am Ausgang des Verdichters oder unmittelbar stromauf davon ist ein Leitschaufelgitter vorgesehen. Das Leitschaufelgitter ist dabei entweder als Leitschaufelgitter der letzten Verdichterstufe und/oder als Nachleitrad ausgebildet und dient bekanntermaßen zur Entdrallung der im ringförmigem Strömungskanal des Verdichters strömenden Luft.

Je nach Bauart ist dabei bekannt, die Leitschaufeln des Leitschaufelgitters freistehend auszubilden. Die Verwendung freistehender Leitschaufeln in der letzten Verdichterstufe und in einem gegebenenfalls vorhandenen Nachleitrad führt jedoch insbesondere bei größeren Radialspalten zwischen den freistehenden Leitschaufelspitzen und der ihnen gegenüberliegenden Innenwand zu einer entlang des Umfangs merklich ungleichförmigen Geschwindigkeits- bzw. Totaldruckverteilung am Austritt der Verdichterstufe bzw. des Nachleitrades bedingt durch den Einfluss der durch den Spalt erzeugten Wirbelströme. Je nach Grad der Umlenkung des Nachleitrades oder der Leitschaufeln der letzten Verdichterstufe ergibt sich durch die ebenfalls auftretende Sekundärströmung ggf. auch an der äußeren Außenwand eine entsprechende Ungleichförmigkeit der Austrittsgeschwindigkeit. Dies führt dazu, dass beim Eintritt in den Diffusor eine in Umfangsrichtung variierende, mit der Zahl der Nachleitradpassagen periodische Verteilung der Strömungsgrößen vorliegt. Diese ungleichförmige Verteilung der kinetischen Energie bedingt ein entsprechend räumlich unterschiedliches Vermögen der Strömung gegen den relativ gleichmäßigen statischen Druckgradienten im Diffusor anzulaufen.

Anstelle von freistehenden Leitschaufeln ist es auch bekannt, beidseitig an Plattformen befestigte Leitschaufelblätter für die Schaufelgitter zu verwenden. Bei derartigen Leitschaufelgittern sind keine schaufelblattspitzenseitigen Radialspalte vorhanden, so dass hier geringfügigere Ungleichverteilungen von Strömungsgrößen auftreten.

Die Ungleichverteilungen führen jedoch zu aerodynamischen Verlusten im Diffusor, was zur Aufgabe der Erfindung führt.

Aufgabe der Erfindung ist die Bereitstellung eines Ringdiffusors für eine Axialturbomaschine mit besonders geringen aerodynamischen Verlusten. Weitere Aufgabe der Erfindung ist die Bereitstellung einer Anordnung für eine Axialturbomaschine umfassend ein Leitschaufelgitter, welches dem Ringdiffusor vorgeschaltet und ebenfalls aerodynamisch besonders verlustarm ausgebildet ist. Weitere Aufgabe der Erfindung ist zudem die Bereitstellung einer derartigen Axialturbomaschine.

Die auf den eingangs genannten Ringdiffusor gerichtete Aufgabe wird durch einen Ringdiffusor mit den Merkmalen des Anspruchs 1 gelöst.

Der Erfindung liegt die Erkenntnis zugrunde, dass bei Ringdiffusoren der eingangs genannten Art die

Ungleichförmigkeit der Zuströmung in Umfangsrichtung bisher nicht berücksichtigt wird. Dadurch ist eine bestmögliche Arbeitsweise des Diffusors nicht möglich, da entweder das Potential der Grenzschicht hinsichtlich ablösefreier Verzögerung in den Bereichen höheren Totaldrucks nicht vollständig umgesetzt werden kann oder aber in Bereichen niedrigeren Totaldrucks die Belastung zu hoch ist und damit eine extrem verlustbehaftete Ablösung der Strömung auftreten kann.

Zudem beruht die Erfindung auf der Erkenntnis, dass nicht beliebig die Ungleichförmigkeit der Strömung in Umfangsrichtung reduziert oder gar vermieden werden kann, da sie aus der ja gewollten Umlenkung des stromauf liegenden Leitschaufelgitters resultiert. Die Erfindung beruht vielmehr auf der Idee, die Ungleichförmigkeit der zuströmenden Luft in Umfangsrichtung zu berücksichtigen und den Ringdiffusor dahingehend anzupassen. Dazu wird vorgeschlagen, dass der Ringdiffusor einstromseitig eine nichtrotationssymmetrische Formgebung aufweist, an die sich ein rotationssymmetrischer Abschnitt - in Bezug auf die Durchströmungsrichtung des Ringdiffusors - stromab anschließt. Mit anderen Worten, die mantelförmige Wandfläche der Innenwand und/oder die mantelförmige Wandfläche der Außenwand des Ringdiffusors wird einströmseitig nicht rotationssymmetrisch ausgeführt. Auf diese Weise ist ein besserer Querschnittsverlauf, der die tatsächlich vorhandene kinetische Energie der Strömung an jeder Position des Umfangs bestmöglich in statischen Druck umsetzt, möglich. Somit wird die Verteilung der Strömungsgrößen bereits am Eintritt in den Ringdiffusor entlang des Umfangs des ringförmigen Diffusorkanals exakt berücksichtigt, was bisher vernachlässigt wurde. Insbesondere dadurch ist eine Anpassung der Verzögerung an die im Eintritt vorhandene Verteilung der kinetischen Energie und damit eine maximale Gesamtdruckrückgewinnung möglich.

Gemäß einem weiteren Merkmal der Erfindung weist die Rotationsunsymmetrie eine maßgeblicher axiale Kontur mit Erhebungen und Senten auf, die mit der Axialerstreckung einen Winkel α einschließt, dessen Größe zwischen 0° und 40° beträgt. Die maßgebliche Kontur kann beispielsweise der axiale Verlauf des Maximalpunkts einer der Erhebungen oder des Minimalpunkts einer der Senken sein. Der Winkel α ist dabei an unterschiedlichen axialen Positionen des Abschnitts unterschiedlich groß, so dass sich in Axialrichtung des Diffusors betrachtet, eine gekrümmte Kontur der Rotationsunsymmetrie ergibt. Vorzugsweise ist der Winkel am einströmseitigen Ende des Ringdiffusors am größten und nimmt in Strömungsrichtung gleichmäßig oder ungleichmäßig ab.

Im Sinne dieser Schrift ist eine Mantelfläche eines Körpers dann rotationssymmetrisch, wenn diese um eine zentrale Achse (Symmetrieachse) um einen beliebigen Winkel gedreht auf sich selbst abgebildet wird. Ist diese Anforderung nicht gegeben, ist die Mantelfläche rotationsunsymmetrisch. Dabei soll jedoch derjenigen Teil einer Mantelfläche eines Körpers unberücksichtigt sein, welcher allein aus Gründen der Befestigung des Körpers an einer Tragstruktur und/oder aus Gründen des Zusammensetzens des ggf. mehrteiligen Körpers zu einem röhrförmigen Körper rotationsunsymmetrisch ist. Sind beispielsweise Schraubenöffnungen für Befestigungsschrauben in der Mantelfläche entlang des Umfangs verteilt, so werden diese Schraubenöffnungen zur Überprüfung, ob die Mantelfläche rotationssymmetrisch ist oder nicht, im Sinne dieser Schrift nicht berücksichtigt. Insofern ist unter Rotationsunsymmetrie nur diejenige, radial äußere und/oder radial innere Wandfläche (Mantelfläche) von Relevanz, welche dazu geeignet ist, die radial äußerste bzw. radial innerste Strömung im Sinne der Erfindung zu beeinflussen. Auch evtl. vorhandene, entlang des Umfangs verteilte Streben zwischen innerer Diffusorwand und äußerer Diffusorwand bleiben bei der Überprüfung, ob die betreffende Mantelfläche rotationsunsymmetrisch ist, unberücksichtigt.

Die auf die Anordnung für eine Axialturbine gerichtete Aufgabe wird durch eine Anordnung gemäß den Merkmalen des Anspruchs 8 gelöst. Die vorgenannte Ungleichförmigkeit des in einen Diffusorkanal einströmenden Arbeitsmediums ist vergleichsweise groß, wenn in einem dem Diffusorkanal vorgeschalteten Strömungskanal zwischen den Wandflächen einer Außenwand und einer Innenwand ein vom Arbeitsmedium durchströmbares Leitschaufelgitter vorgesehen ist. Insofern ist es für eine Anordnung umfassend den Ausgang eines Verdichters und einen sich daran anschließenden Ringdiffusor besonders sinnvoll, eine erfindungsgemäße rotationsunsymmetrische Wandfläche vorzusehen, da die eingangs genannten Ungleichförmigkeiten in der Strömung besonders dort auftreten können. Dies gilt umso mehr, wenn unmittelbar stromauf des Verdichterausgang freistehende Leitschaufeln ein Leitschaufelgitter bilden.

Die auf die Axialturbomaschine gerichtete Aufgabe wird mit den Merkmalen des Anspruchs 14 gelöst, wobei die für die Anordnung geltenden Vorteile analog bei der Axialturbomaschine auftreten.

Vorteilhafte Ausgestaltungen sind in den Unteransprüchen angegeben.

Gemäß einer ersten vorteilhaften Weiterbildung weist die betreffende rotationsunsymmetrische, radial innere und/oder radial äußere Wandfläche entlang des Umfangs abwechselnd Erhebungen und Senken auf. Mit anderen Worten: die rotationsunsymmetrische Wandfläche ist in Umfangsrichtung wellenförmig, wobei die Erhebungen als Wellenberge und die Senken als Wellentäler ausgebildet sind. Die Kontur, d.h. die Übergänge zwischen den Erhebungen und den Senken können dabei eine beliebige Form aufweisen. Sofern der Querschnitt der rotationsunsymmetrischen Wandfläche als Abwicklung dargestellt wird, könnte die Kontur beispielsweise sägezahnartig, dreieckförmig oder auch sinusförmig sein, ggf. mit jeweils dazwischen liegenden geradlinigen (rampenförmigen) oder auch ebenen Abschnitten. Auch können die vorgenannten Konturen beliebig miteinander kombiniert bzw. überlagert sein. Insgesamt ist jedoch die Kontur so gewählt, dass diese die nichtrotationssymmetrische Strömung bestmöglich vergleichmäßigt, um eine wesentlich verbesserte Umsetzung der Strömungsenergie des Mediums in Totaldruck zu erreichen.

Gemäß einer weiteren vorteilhaften Ausgestaltung der Erfindung ist einströmseitig in radialer Richtung gesehen zwischen der Wandfläche der Innenwand und der Wandfläche der Außenwand eine Kanalhöhe vorhanden, wobei die maximale Höhe bzw. maximale Tiefe maximal 25% von der Kanalhöhe beträgt. Dadurch kann eine Störung des mittig zwischen der Innenwand und der Außenwand strömenden Mediums vermieden werden. Gleichzeitig kann eine signifikante Vergleichmäßigung der einströmseitig ungleichförmigen Strömung erreicht werden.

Je nach Art und Weise der Ungleichmäßigkeit der Strömung entlang des Umfangs des Diffusorkanals können an unterschiedlichen axialen Positionen des Abschnitts die Erhebungen unterschiedliche Höhen und/oder die Senken unterschiedliche Tiefen aufweisen. Mit anderen Worten: der axiale Abschnitt, dessen Wandfläche rotationsunsymmetrisch ist, weist ein einströmseitiges Abschnittsende und ein ausströmseitiges Abschnittsende auf, wobei die Rotationsunsymmetrie am einströmseitigen Abschnittsende am größten ist und zum ausströmseitigen Abschnittsende hin abnimmt, da die Ungleichförmigkeit der Strömung mittels der Rotationsunsymmetrie in Strömungsrichtung stetig reduziert werden kann. Zweckmäßiger Weise endet die Rotationsunsymmetrie am ausströmseitigen Abschnittsende und geht dabei kontinuierlich, d.h., stufenlos in einen rotationssymmetrischen Abschnitt des Ringdiffusors über.

Alternativ oder zusätzlich zum Vorgenannten ist es möglich, dass an einer axialen Position des Abschnitts die Erhebungen unterschiedliche Höhen und/oder die Senken unterschiedliche Tiefen aufweisen. Diese Ausgestaltung ist von Vorteil, wenn eine zu vergleichmäßigende Strömungsgröße entlang des Umfangs mehrere unterschiedlich große lokale Maxima oder Minima aufweist.

Es hat sich als vorteilhaft herausgestellt, dass der Ringdiffusor oder zumindest der unsymmetrische Abschnitt als Axialdiffusor oder als Diagonaldiffusor ausgebildet ist.

Da Rotationsunsymmetrien im Strömungsmedium insbesondere dann auftreten, wenn dem Ringdiffusor ein Leitschaufelgitter vorgeschaltet ist, ist die Verwendung eines erfindungsgemäßen Ringdiffusors in einer solchen Anordnung von besonderem Vorteil. Diese Anordnung umfasst dann einen ringförmigen Strömungskanal zwischen einer Außenwand und einer Innenwand, in der ein von einem Arbeitsmedium durchströmbares Leitschaufelgitter vorgesehen ist. Das Leitschaufelgitter kann dabei als Leitschaufelgitter einer Schaufelstufe oder als Nachleitrad ausgebildet sein. Selbstverständlich ist es möglich, dass die Anordnung sowohl ein Leitschaufelgitter als Teil einer Schaufelstufe und ein oder mehrere Leitschaufelgitter als Nachleiträder aufweist. Da die Unsymmetrie im Arbeitsmedium insbesondere bei Leitschaufelgittern mit freistehenden Schaufelblättern auftritt, macht eine Verwendung des erfindungsgemäßen Ringdiffusors stromab eines derartigen Leitschaufelgitters besonders Sinn, wobei dann insbesondere diejenige Wandfläche des Ringdiffusors rotationsunsymmetrisch ausgebildet ist, an welcher die Spalte weiter stromauf angeordnet sind: Sind die Schaufelblätter des Leitschaufelgitters radial außen an einem Leitschaufelträger befestigt, so dass deren nach innen gerichteten Schaufelblattspitzen der Innenwand des Strömungskanals unter Spaltbildung gegenüberliegen, so ist zumindest die Wandfläche der Innenwand des Ringdiffusors abschnittsweise rotationsunsymmetrisch ausgebildet. Für den Fall, dass die freistehenden Leitschaufeln des Leitschaufelgitters der Außenwand des Strömungskanals unter Spaltbildung gegenüberliegen, so ist zumindest die Wandfläche der Außenwand des Ringdiffusors rotationsunsymmetrisch ausgebildet.

Um einen besonders aerodynamisch verlustarmen Übergang zwischen der Wandfläche der Außenwand des Ringdiffusors und der Wandfläche der Außenwand des Strömungskanals und/oder der Wandfläche der Innenwand des Ringdiffusors und der Wandfläche der Innenwand des Strömungskanals bereitzustellen, ist der Übergang stufenlos ausgebildet.

Je nach Ausgestaltung der Anordnung und der auftretenden Strömung kann es erforderlich sein, auch die Wandfläche der Außenwand des Strömungskanals und/oder die Wandfläche der Innenwand des Strömungskanals, in welchen das Leitschaufelgitter angeordnet ist, zumindest abschnittsweise rotationsunsymmetrisch auszubilden.

Ingesamt ist die Erfindung für Vorrichtungen sinnvoll, die als Anordnung zumindest einen Verdichterausgang und einen Ringdiffusor umfassen. Insbesondere bei derartigen Vorrichtungen treten im Medium, entlang des Umfangs des Strömungskanals betrachtet, Ungleichförmigkeiten in der Zuströmung auf, die durch eine erfindungsgemäße Ausgestaltung berücksichtigt werden können. Durch die Berücksichtigung der lokalen Zuströmungsverhältnisse kann die Belastung in Bereichen niedrigeren Totaldrucks gesenkt werden. Gleichzeitig kann das Potential der Grenzschicht hinsichtlich ablösefreier Verzögerung in Bereichen höheren Totaldrucks besser umgesetzt werden, so dass insgesamt weniger Ablösungen auftreten, wenn nicht ganz vermieden werden können. Allgemein treten somit geringere aerodynamische Verluste bereits im Leitschaufelgitter und auch im Ringdiffusor auf, so dass ein höherer Druckrückgewinn als bei einem rotationssymmetrischen Ringdiffusor möglich ist. Mit den erfindungsgemäßen Vorrichtungen wird folglich die tatsächlich vorhandene kinetische Energie an jeder Position des Umfangs bestmöglich in statischen Druck umgesetzt.

Die Erfindung wird anhand einer Zeichnung weiter erläutert, wobei in der nachfolgenden Figurenbeschreibung weitere Merkmale und Vorteile erläutert werden. Es zeigt:
- FIG 1: den Längsschnitt durch den Verdichterausgang eines Axialverdichters und den sich daran anschließenden Ringdiffusor einer stationären axial durchströmten Gasturbine,
- FIG 2: in einer perspektivischen Darstellung einen sektorförmigen Ausschnitt aus dem Ringdiffusor gemäß FIG 1,
- FIG 3: als Draufsicht einen Teil der Abwicklung der Wandfläche der Innenwand des Diffusors und des Strömungskanals des Verdichters,
- FIG 4: den Schnitt IV - IV gemäß FIG 3 und
- FIG 5: einen Querschnitt durch die Innenwand des Ringdiffusors.

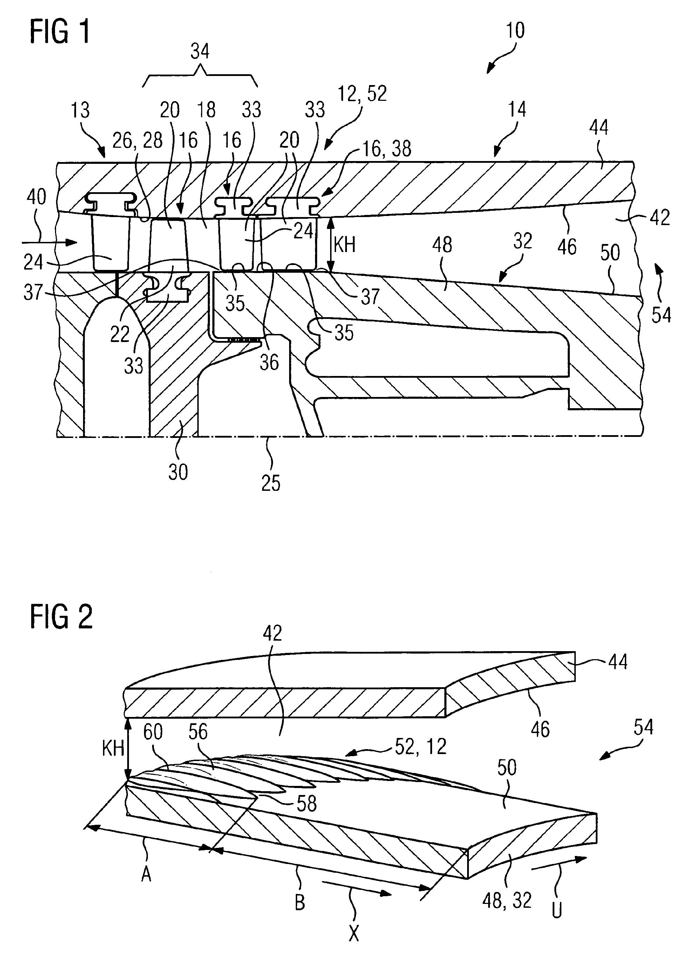

FIG 1 zeigt einen Längsschnitt durch eine axial durchströmte, stationäre Gasturbine 10 im Abschnitt eines Ausgangs 12 des Gasturbinenverdichters 13 und den sich an den Ausgang 12 anschließenden Ringdiffusor 14. Vom Verdichter 13 sind lediglich die im stromabwärtigen, d.h. hinteren Teil des Verdichters 13 angeordneten Schaufelgitter 16 dargestellt. Jedes Schaufelgitter 16 umfasst zumindest die in einen im Querschnitt ringförmigen Strömungskanal 18 strahlenartig angeordneten Schaufelblätter 20, wobei jedes Schaufelblatt 20 entweder ein Bestandteil einer Laufschaufel 22 oder ein Bestandteil einer Leitschaufel 24 ist.

Mit 25 ist die Maschinenachse bezeichnet, um welche sich der im Querschnitt ringförmige Strömungskanal 18 konzentrisch erstreckt. Der Strömungskanal 18 des Verdichters 13 wird außen von einer Wandfläche 26 begrenzt, die Teil eines Leitschaufelträgers 28 ist. Die radial innere Begrenzung des Strömungskanals 18 wird im Wesentlichen von Rotorscheiben 30 und stromab davon von einer feststehenden Wellenabdeckung 32 gebildet. An der Rotorscheibe 30 sind die Laufschaufeln 22 mittels einer beispielsweise hammerkopfförmigen Verhakung 33 befestigt. Deren freistehende Schaufelblattspitzen liegen der Wandfläche 26 unter Spaltbildung gegenüber. Stromab der Laufschaufel 22 sind die zu einem Schaufelgitter 16 gehörenden Leitschaufeln 24 ebenfalls über eine Verhakung 33 am Leitschaufelträger 28 befestigt. Dabei bilden die an der Rotorscheibe 30 befestigten Laufschaufeln 22 gemeinsam mit den davon stromab angeordneten Leitschaufeln 24 die letzte Verdichterstufe 34 des Axialverdichters 13. Die Leitschaufeln 24 der letzten Verdichterstufe 34 sind ebenfalls als freistehende Schaufeln ausgebildet, so dass das deren jeweilige freie Schaufelblattspitze 35 jeweils unter Spaltbildung 37 einer Wandfläche 36 gegenüberliegt, welche Wandfläche 36 Teil der Wellenabdeckung 32 ist.

Weiter stromab des Leitschaufelgitters 16 der letzten Verdichterstufe 34 ist als sog. Nachleitrad 38 ein weiteres Schaufelgitter 16 vorgesehen, welches radial außen ebenfalls über eine Verhakung 33 am Leitschaufelträger 28 starr befestigt ist. Auch die Schaufelblätter 20 des Nachleitrades 38 liegen unter Spaltbildung 37 der Wandfläche 36 der Wellenabdeckung 32 gegenüber.

In Strömungsrichtung des durch die Schaufelblätter 20 verdichteten Mediums 40 gesehen folgt dem Nachleitrad 38 ein Ringdiffusor 14. Der Ringdiffusor 14 weist einen ebenfalls ringförmigen Diffusorkanal 42 auf, der radial außen von einer im Querschnitt kreisförmigen Außenwand 44 begrenzt ist. Genauer gesagt, begrenzt die im Querschnitt im Wesentlichen kreisförmige Wandfläche 46 der Außenwand 44 radial außen den Diffusorkanal 42. Die Außenwand des Strömungskanals 18 und die Außenwand 44 des Diffusorkanals 42 sind dabei von der gleichen Struktur, nämlich vom Leitschaufelträger 28 gebildet, was aber nicht zwingend der Fall sein muss.

Der Ringdiffusor 14 umfasst des Weiteren eine zur Außenwand 44 koaxiale Innenwand 48, welche Teil der Wellenabdeckung 32 ist. Dabei begrenzt die Wandfläche 50 der im Querschnitt kreisförmigen Innenwand 48 den Diffusorkanal 42 radial innen. Die Wände 44, 48 bzw. deren Wandflächen 46, 50 divergieren in Längserstreckung des Ringdiffusors 14 von einem einströmseitigen Ende 52 des Ringdiffusors 14 zu einem ausströmseitigen Ende 54. Der in radialer Richtung gesehene im Einströmbereich des Ringdiffusors 14 erfasste Abstand zwischen der äußeren Wandfläche 46 und der inneren Wandfläche 50 wird als Kanalhöhe KH bezeichnet.

Durch die Verwendung freistehender Leitschaufeln 24 in der letzten Verdichterstufe 34 und/oder im Nachleitrad 38 tritt beim Betrieb der Gasturbine 10 und somit beim Betrieb des Verdichters 13 im verdichteten Medium 40 eine Geschwindigkeits- bzw. Totaldruckverteilung am Austritt des Nachleitrades 38 auf, welche entlang des Umfangs ungleichmäßig ist. Dies wird insbesondere durch den Einfluss einer Spaltwirbelströmung bedingt, welche ihrerseits durch den Spalt 37 zwischen den Leitschaufelblattspitzen 35 und der diesen gegenüberliegenden Wandfläche 36 hervorgerufen wird. Die am Verdichterausgang 12 ankommende bzw. in den Ringdiffusoreingang einströmende Verdichteraustrittsströmung 40 ist somit rotationsunsymmetrisch. Sie weist entlang des Umfangs, insbesondere in wandnahen Bereichen unterschiedlich große Strömungsgeschwindigkeiten und Strömungsrichtungen auf.

Erfindungsgemäß folgt stromab derjenigen Wandfläche 36, an welcher die Leitschaufelblattspitze 35 unter Spaltbildung 37 der Wandfläche 36 gegenüberliegt, eine nichtrotationssymmetrische Wandfläche 50. Die Wandfläche 50 ist Teil des Ringdiffusors 14 und erstreckt sich über zumindest einen axialen Abschnitt. Die rotationsunsymmetrische Kontur der Wandfläche 50 im Bereich des Ringdiffusors 14 ist in FIG 1 nicht weiter dargestellt.

FIG 2 zeigt in perspektivischer Darstellung einen Ausschnitt aus dem erfindungsgemäßen, divergierendem Diffusorkanal 42 des Ringdiffusors 14. Divergierend bedeutet dabei, dass die von dem Medium zu durchströmende Querschnittsfläche in stromabwärtiger Richtung zunimmt. Die Zunahme kann bei Axialdiffusoren beispielsweise durch die Verringerung des mittleren Durchmessers der Innenwand 48 und/oder durch die Vergrößerung des mittleren Durchmessers der Außenwand 44 erfolgen. Bei Diagonaldiffusoren vergrößern sich sowohl der Durchmesser der Außenwand als auch der Durchmesser der Innenwand, wobei die Größenzunahme des Durchmessers der Außenwand größer ist als die der Innenwand.

In FIG 2 sind dabei lediglich die den Diffusorkanal 42 begrenzenden Wände 44, 48 dargestellt. Das mit dem Verdichterausgang 12 zusammenfallende einströmseitige Ende 52 des Ringdiffusors 14 ist in FIG 2 weiter links dargestellt. In FIG 2 weiter rechts ist der Verdichterdiffusorausgang, also das ausströmseitige Ende 54 des Ringdiffusors 14 gezeigt. Vom einströmseitigen Ende 52 des Ringdiffusors 14 aus erstreckt sich in Axialrichtung X ein Abschnitt A, in dem die Wandfläche 50 rotationsunsymmetrisch ausgebildet ist. Die gezeigte Rotationsunsymmetrie entsteht durch die Anordnungen von entlang des Umfangs U der Wandfläche 50 abwechselnd angeordneten Erhebungen 56 und Senken 58. Stromab des Abschnitts A schließt sich ein rotationssymmetrischer Abschnitt B an, welcher sich bis zum Diffusorausgang erstreckt.

Die Erhebungen 56 und Senken 58 sind in zur Anzahl der Leitschaufeln 24 des Nachleitrades 38 entsprechender Anzahl gleichmäßig entlang des Umfangs U verteilt. Bei der in FIG 2 gezeigten Ausgestaltung beträgt die axiale Erstreckung des Abschnitts A etwa 30 % der gesamten axialen Erstreckung des Ringdiffusors 14. Es ist aber auch möglich, dass der Abschnitt A sich über die gesamte Länge des Ringdiffusors 14, also über 100% erstreckt.

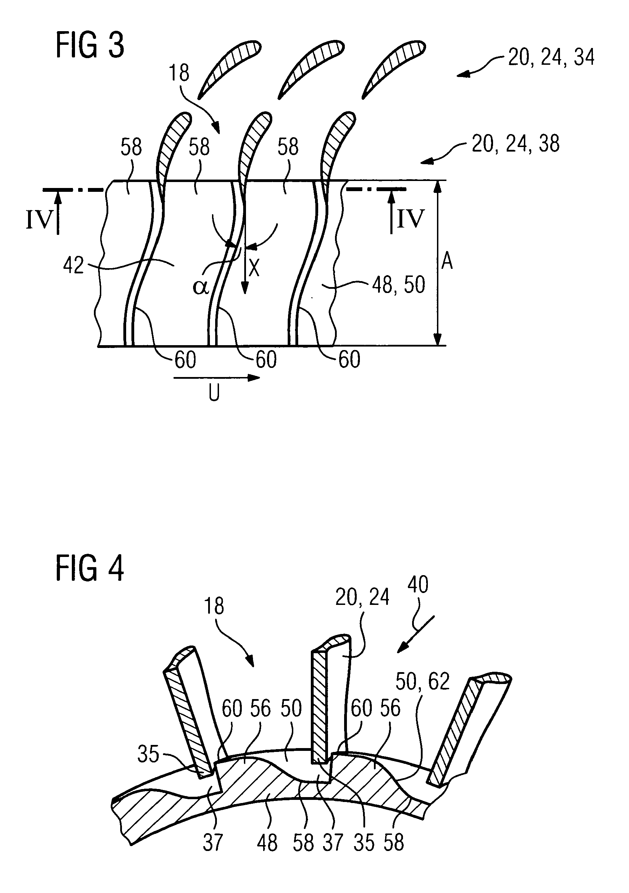

Jede Erhebung 56 weist eine sich ebenfalls in Strömungsrichtung erstreckende Linie 60 auf, die die maximale Höhe der entsprechenden Erhebung markiert. Diese Linie 60 stellt eine maßgebliche Kontur dar, welche mit der Axialrichtung X einen Winkel α einschließt. Dieser Winkel α weist, je nach Ungleichmäßigkeit der ankommenden Strömung, einen Größe von bis zu 40 ° auf, wobei der Winkel α an unterschiedlichen axialen Positionen auch unterschiedlich groß ist. Dementsprechend ist die Linie 60 nicht geradlinig, sondern in Axialrichtung gesehen, gekrümmt. Dies ist durch die in FIG 3 gezeigten Linien 60 beispielhaft dargestellt. FIG 3 zeigt eine Draufsicht auf eine Abwicklung der Innenwand 48 mit gleichzeitigem Schnitt durch die Leitschaufeln 24. Die in FIG 3 weiter oben dargestellten Schaufelblätter 20 sind diejenigen der Leitschaufeln 24 der letzten Verdichterstufe 34, stromab davon sind die Schaufelblätter 20 der Leitschaufeln 24 des Nachleitrades 38 gezeigt.

Die Erhebungen 56 und Senken 58 führen zu einer Umlenkung der im Diffusorkanal 42 radial innen auftretenden Strömung des Mediums 40, wodurch eine stetige, lokale Anpassung der Strömungsgebiete mit unterschiedlichen Strömungsbedingungen an die dazwischen angeordneten Strömungsgebiete mit hauptsächlich gleichen Strömungsgebieten erfolgt. Die Anpassung führt insgesamt zu einer Vergleichmäßigung der Strömungseigenschaften der am Ringdiffusoreingang 52 ankommenden Strömung, so dass die im Ringdiffusor 14 gegen einen Druck anlaufende Strömung gleichmäßiger und folglich verlustärmer verzögert werden kann. Hierdurch wird eine effiziente Umwandlung von kinetischer Strömungsenergie in statischen Druck erreicht, ohne dass eine extrem verlustbehaftete Ablösung der Strömung auftritt.

Aus FIG 2 geht hervor, dass die Erhebungen 56 und Senken 58 in Strömungsrichtung unterschiedliche Höhen resp. Tiefen aufweisen. Einströmseitig ist die Spanne zwischen Höhe und Tiefe maximal. Mit zunehmender axialer Länge nähern sich die Höhen und Tiefen benachbarter Erhebungen 56 und Senken 58 an, bis sie sich am stromabseitigen Ende des Abschnitts A auf einem gemeinsamen Radius vereinigen. Von dieser Position an erstreckt sich der Ringdiffusor zum ausströmseitigen Ende 54 dann rotationssymmetrisch hin (FIG 2).

Gemäß FIG 2 enden alle Erhebungen 56 und Senken 58 an einer axialen Position. Dagegen ist auch denkbar, dass unterschiedliche Erhebungen 56 und Senken 58 an unterschiedlichen axialen Positionen enden. Beispielsweise können diffusoreingangsseitig Erhebungen 56 und Senken 58 in einer Anzahl identisch zu den Leitschaufeln 24 vorhanden sein, wogegen dann zum Diffusorausgang 54 hin die Anzahl der Erhebungen 56 und Senken 58 abnimmt. Dies ist beispielsweise dann von Vorteil, wenn die Diffusorströmung auf stromab des Ringdiffusors 14 angeordnete Strukturen angepasst werden soll. Bei den Strukturen könnte es sich beispielsweise um Streben oder Stützen handeln, die in geringerer Anzahl als Leitschaufeln 24 entlang des Umfangs verteilt sind und beispielsweise die Wellenabdeckung 32 mit dem Gehäuse verbinden. Bei den Strukturen könnte es sich aber auch im die Brenner oder Rohrbrennkammern der Gasturbine handeln.

Aus FIG 3 geht auch hervor, dass der rotationsunsymmetrische Abschnitt A des Ringdiffusors 14 nicht nur allein im Diffusorkanal 42 vorgesehen sein kann. Der rotationsunsymmetrische Abschnitt A kann sich ggf. auch weiter stromauf bis in den Strömungskanal 18 des Verdichters 13 erstrecken, sofern dies erforderlich ist. In diesem Fall erfolgt dort dann die Umlenkung der Strömung einerseits durch die Schaufelblätter 20, was insbesondere für die wandferne, zentralere Strömung des Mediums gilt. Die wandnahe Strömung, insbesondere diejenige wandnahe Strömung, an welcher Wand 48 die Radialspalte 37 der Schaufelblätter 20 angeordnet sind, kann dann bereits auch schon durch die Erhebungen 56 und Senken 58 beeinflusst und ggf. umgelenkt werden.

FIG 4 zeigt den Ausschnitt durch den Querschnitt des Strömungskanals 18 mit den darin angeordneten Schaufelblättern 20. Die Schaufelblätter 20 sind radial außen befestigt, was in FIG 4 aber nicht gezeigt ist. Dagegen zeigt FIG 4 die freistehenden Schaufelblattspitzen 35, die der Innenwand 48 unter Spaltbildung gegenüberliegen. Die Radialspalte sind mit 37 bezeichnet. Gemäß FIG 4 ist auch die Wandfläche 50 der Innenwand 48 rotationsunsymmetrisch ausgebildet, wobei die Erhebungen 56 und Senken 58 in gleicher Anzahl wie die Leitschaufeln 24 auftreten. Die im Querschnitt gesehene Kontur 62 der Erhebungen 56 und Senken 58 gleicht dabei einer Form von sich periodisch wiederholenden Sägezähnen mit gekrümmten Rampen.

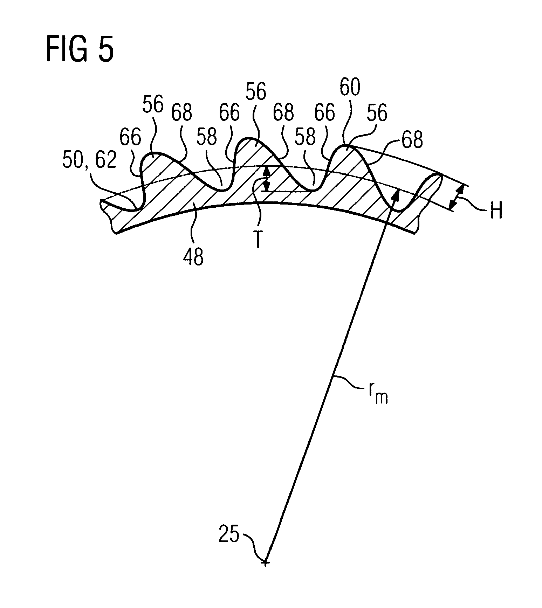

Eine alternative Form der Querschnittskontur 62 der Erhebungen 56 und Senken 58, welche beispielsweise weiter stromab im Diffusorkanal 42 verwendet werden kann, zeigt FIG 5. Hier ist die Kontur prinzipiell der Sinus-Form angenähert, wobei eine der beiden Flanken 66, welche jeweils eine der Erhebung 56 mit einer benachbarten Senke 58 verbindet, jeweils steiler ausgebildet ist als die andere der beiden Flanken 68. Diese Form der Kontur 62 ist aber nicht einschränkend, sondern lediglich exemplarisch. Andere Konturen, auch mit eckigen Spitzen versehene Konturen sind denkbar.

Zudem ist in FIG 5 der mittlere Radius rₘ, bezogen auf die Maschinenachse 25, dargestellt, auf den eine maximale Höhe H der Erhebung 56 und eine maximale Tiefe T der Senke 58 bezogen wird. Definitionsgemäß ist dabei der mittlere Radius rₘ das arithmetische Mittel aus demjenigen Radius, auf dem die maximale Höhe H angeordnet ist und demjenigen Radius, auf dem die maximale Tiefe T angeordnet ist. Die maximale Höhe H bzw. maximale Tiefe T beträgt dabei maximal 25% der einströmseitige Kanalhöhe KH.

Insgesamt betrifft die Erfindung einen Ringdiffusor 14 für eine Axialturbomaschine, beispielsweise für eine Gasturbine 10, mit einer Aussenwand 44 und einer dazu koaxialen Innenwand 48, zwischen denen ein Diffusorkanal 42 sich ringförmig entlang einer Axialerstreckung von einem einströmseitigen Ende 52 divergierend zu einem ausströmseitigen Ende 54 erstreckt, wobei die Innenwand 48 und die Außenwand 44 jeweils eine den Diffusorkanal 42 begrenzende Wandfläche 46, 50 umfassen. Um einen an eine entlang des Umfangs ungleichförmige Zuströmung angepassten Diffusorkanal 42 anzugeben, mittels dem eine besonders effiziente Umsetzung kinetischer Energie in statische Energie möglich ist, wird mit der Erfindung eine den Diffusorkanal 42 eingangseitig begrenzende Wandfläche 44, 46 vorgeschlagen, welche rotationsunsymmetrisch ist und die kennzeichnenden Merkmale des Anspruchs 1 aufweist.

## Patentansprüche

1. Ringdiffusor (14) für eine Axialturbomaschine,
mit einer Außenwand (44) und einer dazu koaxialen Innenwand (48), zwischen denen ein Diffusorkanal (42) sich ringförmig entlang einer Axialerstreckung (X) von einem einströmseitigen Ende (52) divergierend zu einem ausströmseitigen Ende (54) erstreckt, wobei die Innenwand (48) und die Außenwand (44) jeweils eine den Diffusorkanal (42) begrenzende Wandfläche (46, 50) umfassen
wobei zumindest in einem Abschnitt (A) des Ringdiffusors (14) die Wandfläche (50) der Innenwand (48) und/oder die Wandfläche (46) der Außenwand (44) rotationsunsymmetrisch ist,
wobei der Abschnitt (A) am einströmseitigen Ende (52) des Ringdiffusors (14) angeordnet ist und in einen rotationssymmetrischen Abschnitt (B) übergeht,
**dadurch gekennzeichnet,**
**dass** der rotationssymmetrische Abschnitt (B) in Bezug auf die Durchströmungsrichtung des Ringdiffusors (14) stromab des rotationsunsymmetrisch Abschnitts (A) angeordnet ist und
bei dem die Rotationsunsymmetrie eine maßgebliche axiale Kontur (60) mit Erhebungen (56) und Senken (58) aufweist, die mit der Axialerstreckung einen Winkel (α) einschließt, dessen Größe zwischen 0° und 40 ° beträgt und an unterschiedlichen axialen Positionen des Abschnitts (A) unterschiedlich groß ist.

2. Ringdiffusor (14) nach Anspruch 1,
bei dem die rotationsunsymmetrische Wandfläche (46, 50) entlang des Umfangs die Erhebungen (56) und die Senken (58) aufweist.

3. Ringdiffusor (14) nach Anspruch 1 oder 2,
bei dem zwischen der Wandfläche (50) der Innenwand (48) und der Wandfläche (46) der Außenwand (44) eine einströmseitige Kanalhöhe (KH) vorhanden ist, auf die eine maximale Höhe (H) jeder Erhebung (56) und eine maximale Tiefe (T) jeder Senke (58) bezogen wird, wobei die maximale Höhe (H) bzw. maximale Tiefe (T) maximal 25% von der Kanalhöhe (KH) beträgt.

4. Ringdiffusor (14) nach einem der vorangehenden Ansprüche, bei dem an einer axialen Position des Abschnitts (A) die Erhebungen (56) unterschiedliche Höhen (H) und/oder die Senken (58) unterschiedliche Tiefen (T) aufweisen.

5. Ringdiffusor (14) nach einem der vorangehenden Ansprüche, bei dem an unterschiedlichen axialen Positionen des Abschnitts (A) die Erhebungen (56) unterschiedliche Höhen (H) und/oder die Senken (58) unterschiedliche Tiefen (T) aufweisen.

6. Ringdiffusor (14) nach einem der vorangehenden Ansprüche, bei dem der Abschnitt (A), dessen Wandfläche rotationsunsymmetrisch ist, stufenlos in den rotationssymmetrischen Abschnitt (B) übergeht.

7. Ringdiffusor (14) nach einem der vorangehenden Ansprüche, bei dem zumindest der Abschnitt (A) als Axialdiffusor oder Diagonaldiffusor ausgebildet ist.

8. Anordnung für eine Axialturbomaschine, umfassend einen ringförmigen Strömungskanal (18), welcher von Wandflächen (26, 36) einer Außenwand (28) und einer Innenwand (32) begrenzt ist und zwischen denen zumindest ein von einem Medium (40) durchströmbares Leitschaufelgitter (16) vorgesehen ist, **dadurch gekennzeichnet, dass** stromab des Leitschaufelgitters (16) ein Ringdiffusor (14) nach einem der vorangehenden Ansprüche angeordnet ist.

9. Anordnung nach Anspruch 8,
bei der das Leitschaufelgitter (16) als Leitschaufelgitter einer Schaufelstufe (34) oder als Nachleitrad (38) ausgebildet ist.

10. Anordnung nach Anspruch 8 oder 9,
bei der das Leitschaufelgitter (16) eine Anzahl von aerodynamisch gekrümmten Schaufelblättern (20) umfasst, deren frei stehende Schaufelblattspitzen (35) radial innen der Innenwand (32) des Strömungskanals (18) oder radial außen der Außenwand (28) des Strömungskanals (18) jeweils unter Spaltbildung gegenüber liegen.

11. Anordnung nach Anspruch 10,
bei der die Außenwand (44) des Ringdiffusors (14) stromab der Außenwand (28) des Strömungskanals (18) und/oder die Innenwand (48) des Ringdiffusors (14) stromab der Innenwand (32) des Strömungskanals (18) angeordnet ist, und
bei der diejenige Wandfläche (50) des Ringdiffusors (14) rotationsunsymmetrisch ausgebildet ist, an welcher die Spalte (37) weiter stromauf angeordnet sind.

12. Anordnung nach einem der Ansprüche 8 bis 11, bei der die Wandfläche (46) der Außenwand (44) des Ringdiffusors (14) in die Wandfläche (26) der Außenwand (28) des Strömungskanals (18) und/oder die Wandfläche (50) der Innenwand (32) des Ringdiffusors (14) in die Wandfläche (36) der Innenwand (32) des Strömungskanals (18) übergeht.

13. Anordnung nach einem der Ansprüche 8 bis 11,
bei der die Wandfläche (26) der Außenwand (28) des Strömungskanals (18) und/oder die Wandfläche (36) der Innenwand (32) des Strömungskanals (18) jeweils einen Abschnitt aufweisen, in dem eine der Wandfläche (26, 36) oder beide Wandflächen (26, 36) rotationsunsymmetrisch ist bzw. sind.

14. Axialturbomaschine mit einer Anordnung nach einem der Ansprüche 8 bis 13.

15. Axialturbomaschine nach Anspruch 14,
ausgebildet als Verdichter (13) einer stationären Gasturbine (10), so dass der Verdichterausgang (12) als Anordnung gemäß dem Oberbegriff des Anspruchs 9 ausgebildet ist, an dem sich als Ausgangsdiffusor der Ringdiffusor (14) nach einem der Ansprüche 1 bis 7 unmittelbar anschließt.

## Claims

1. Ring diffuser (14) for an axial turbomachine, with an outer wall (44) and with an inner wall (48) coaxial thereto, between which a diffuser duct (42) extends in ring form along an axial extent (X) so as to diverge from an inflow-side end (52) to an outflow-side end (54), the inner wall (48) and the outer wall (44) in each case comprising a wall surface (46, 50) delimiting the diffuser duct (42), the wall surface (50) of the inner wall (48) and/or the wall surface (46) of the outer wall (44) being rotationally asymmetrical at least in a portion (A) of the ring diffuser (14), the portion (A) being arranged at the inflow-side end (52) of the ring diffuser (14) and merging into a rotationally symmetrical portion (B) **characterized in that** the rotationally symmetrical portion (B) is arranged downstream of the rotationally asymmetrical portion (A) in relation to the throughflow direction of the ring diffuser (14)
and
in which the rotational asymmetry has a critical axial contour (60) with elevations (56) and depressions (58) which forms with the axial extent an angle (α), the size of which amounts to between 0° and 40° and is of different size in different axial positions of the portion (A).

2. Ring diffuser (14) according to Claim 1, in which the rotationally asymmetrical wall surface (46, 50) has elevations (56) and depressions (58) along the circumference.

3. Ring diffuser (14) according to Claim 1 or 2, in which, between the wall surface (50) of the inner wall (48) and the wall surface (46) of the outer wall (44), there is an inflow-side duct height (KH) to which a maximum height (H) of each elevation (56) and a maximum depth (T) of each depression (58) are related, the maximum height (H) or maximum depth (T) amounting at most to 25% of the duct height (KH).

4. Ring diffuser (14) according to one of the preceding claims, in which the elevations (56) have different heights (H) and/or the depressions (58) have different depths (T) in one axial position on the portion (A).

5. Ring diffuser (14) according to one of the preceding claims, in which the elevations (56) have different heights (H) and/or the depressions (58) different depths (T) in different axial positions on the portion (A).

6. Ring diffuser (14) according to one of the preceding claims, in which the portion (A), the wall surface of which is rotationally asymmetrical, merges steplessly into the rotationally symmetrical portion (B).

7. Ring diffuser (14) according to one of the preceding claims, in which at least the portion (A) is designed as an axial diffuser or diagonal diffuser.

8. Arrangement for an axial turbomachine, comprising a ringshaped flow duct (18) which is delimited by wall surfaces (26, 36) of an outer wall (28) and of an inner wall (32) and between which is provided at least one guide vane cascade (16) through which a medium (40) is capable of flowing, **characterized in that** a ring diffuser (14) according to one of the preceding claims is arranged downstream of the guide vane cascade (16).

9. Arrangement according to Claim 8, in which the guide vane cascade (16) is designed as a guide vane cascade of a vane stage (34) or as a follow-up guide wheel (38).

10. Arrangement according to Claim 8 or 9, in which the guide vane cascade (16) comprises a number of aerodynamically curved vane leaves (20), the free-standing vane leaf tips (35) of which lie, radially on the inside, opposite the inner wall (32) of the flow duct (18) or, radially on the outside, opposite the outer wall (28) of the flow duct (18), in each case so as to form a gap.

11. Arrangement according to Claim 10, in which the outer wall (44) of the ring diffuser (14) is arranged downstream of the outer wall (28) of the flow duct (18) and/or the inner wall (48) of the ring diffuser (14) is arranged downstream of the inner wall (32) of the flow duct (18), and
in which that wall surface (50) of the ring diffuser (14) at which the gaps (37) are arranged further upstream is a rotationally asymmetrical design.

12. Arrangement according to one of Claims 8 to 11, in which the wall surface (46) of the outer wall (44) of the ring diffuser (14) merges into the wall surface (26) of the outer wall (28) of the flow duct (18) and/or the wall surface (50) of the inner wall (32) of the ring diffuser (14) merges into the wall surface (36) of the inner wall (32) of the flow duct (18).

13. Arrangement according to one of Claims 8 to 11, in which the wall surface (26) of the outer wall (28) of the flow duct (18) and/or the wall surface (36) of the inner wall (32) of the flow duct (18) have/has in each case a portion in which one wall surface (26, 36) or both wall surfaces (26, 36) is or are rotationally asymmetrical.

14. Axial turbomachine having an arrangement according to one of Claims 8 to 13.

15. Axial turbomachine according to Claim 14, designed as a compressor (13) of a stationary gas turbine (10), so that the compressor outlet (12) is designed as an arrangement according to the preamble of Claim 9, which is followed directly by the ring diffuser (14) according to one of Claims 1 to 7 as an outlet diffuser.

## Revendications

1. Diffuseur ( 14 ) annulaire pour une turbomachine axiale, comprenant une paroi ( 44 ) extérieure et une paroi ( 48 ) intérieure qui lui est coaxiale, entre lesquelles s'étend annulairement le long d'une étendue ( X ) axiale, d'une extrémité ( 52 ) du côté de l'entrée du courant en divergeant vers une extrémité ( 54 ) du côté de la sortie du courant, un canal ( 42 ) formant diffuseur, la paroi (18) intérieure et la paroi ( 44 ) extérieure comprenant respectivement une surface ( 46, 50 ) de paroi délimitant le canal ( 42 ) formant diffuseur,
dans lequel, au moins dans un tronçon ( A ) du diffuseur ( 14 ) annulaire, la surface ( 50 ) de la paroi ( 48 ) intérieure et/ou la surface ( 46 ) de la paroi ( 44 ) extérieure n'est pas de révolution,
dans lequel le tronçon ( A ) est disposé à l'extrémité ( 52 ) du côté de l'entrée du courant du diffuseur ( 14 ) annulaire et se transforme en un tronçon ( B ) de révolution, **caractérisé en ce que** le tronçon ( B ) de révolution est disposé, par rapport au sens de passage du courant dans le diffuseur ( 14 ) annulaire, en aval du tronçon ( B ) qui n'est pas de révolution, et
dans lequel la symétrie de révolution a un contour ( 60 ) axial prépondérant ayant des surélévations ( 56 ) et des creux ( 58 ) qui font avec l'étendue axiale un angle ( α ), dont la valeur est comprise entre 0° et 40° et qui est différent en des positions axiales différentes du tronçon ( A ).

2. Diffuseur ( 14 ) annulaire suivant la revendication 1, dans lequel la surface ( 46, 50 ) de paroi qui n'est pas de révolution a les surélévations ( 56 ) et les creux ( 58 ) le long du pourtour.

3. Diffuseur ( 14 ) annulaire suivant la revendication 1 ou 2,
dans lequel il y a entre la surface ( 50 ) de la paroi ( 48 ) intérieure et la surface ( 46 ) de la paroi ( 44 ) extérieure une hauteur ( KH ) de canal du côté de l'entrée du courant, à laquelle une hauteur ( H ) maximum de chaque surélévation ( 56 ) et une profondeur ( T ) maximum de chaque creux ( 58 ) est rapportée, la hauteur ( H ) maximum ou la profondeur ( T ) maximum représentant au maximum 25% de la hauteur ( KH ) du canal.

4. Diffuseur ( 14 ) annulaire suivant l'une des revendications précédentes, dans lequel, en une position axiale du tronçon ( A ), les surélévations ( 56 ) ont des hauteurs ( H ) différentes et/ou les creux ( 58 ) ont des profondeurs ( T ) différentes.

5. Diffuseur ( 14 ) annulaire suivant l'une des revendications précédentes, dans lequel en des positions axiales différentes du tronçon ( A ), les surélévations ( 56 ) ont des hauteurs ( H ) différentes et/ou les creux ( 58 ) ont des profondeurs ( T ) différentes.

6. Diffuseur ( 14 ) annulaire suivant l'une des revendications précédentes, dans lequel le tronçon ( A ) dont la surface de paroi n'est pas de révolution se transforme d'une manière continue en le tronçon ( B ) de révolution.

7. Diffuseur ( 14 ) annulaire suivant l'une des revendications précédentes, dans lequel au moins le tronçon ( A ) est constitué en diffuseur axial ou en diffuseur diagonal.

8. Agencement pour une turbomachine axiale, comprenant un canal ( 18 ) annulaire d'écoulement qui est délimité par des surfaces ( 26, 36 ) d'une paroi ( 28 ) extérieure et d' une paroi ( 32 ) intérieure et entre lesquelles est prévue au moins une grille ( 16 ) d'aubes directrices pouvant être traversée par un fluide ( 40 ), **caractérisé en ce qu'**un diffuseur ( 14 ) annulaire suivant l'une des revendications précédentes est monté en aval de la grille ( 16 ) d'aubes directrices.

9. Agencement suivant la revendication 8, dans lequel la grille ( 16 ) d'aubes directrices est constituée en grille d'aubes directrices d'un étage ( 34 ) d'aube ou en post-roue ( 38 ) directrice.

10. Agencement suivant la revendication 8 ou 9, dans lequel la grille ( 16 ) d'aubes directrices comprend un certain nombre de lames ( 20 ) d'aube incurvées aérodynamiquement, dont les pointes ( 35 ) libres sont opposées l'une à l'autre respectivement avec formation d'un intervalle radialement à l'intérieur de la paroi ( 32 ) intérieure du canal ( 18 ) d'écoulement ou radialement à l'extérieur de la paroi ( 28 ) extérieure du canal ( 18 ) d'écoulement.

11. Agencement suivant la revendication 10, dans lequel la paroi ( 44 ) extérieure du diffuseur ( 14 ) annulaire est disposée en aval de la paroi ( 28 ) extérieure du canal ( 18 ) d'écoulement et/ou la paroi ( 48 ) intérieure du diffuseur ( 14 ) annulaire est disposée en aval de la paroi ( 32 ) intérieure du canal ( 18 ) d'écoulement, et
dans lequel n'est pas de révolution la surface ( 50 ) de paroi du diffuseur ( 40 ) annulaire, sur laquelle les intervalles ( 37 ) sont disposés plus en amont.

12. Agencement suivant l'une des revendications 8 à 11, dans lequel la surface ( 46 ) de la paroi ( 44 ) extérieure du diffuseur annulaire se transforme en la surface ( 26 ) de la paroi ( 28 ) extérieure du canal ( 18 ) d'écoulement et/ou la surface ( 50 ) de la paroi ( 32 ) intérieure du diffuseur ( 14 ) annulaire se transforme en la surface ( 36 ) de la paroi ( 32 ) intérieure du canal ( 18 ) d'écoulement.

13. Agencement suivant l'une des revendications 8 à 11, dans lequel la surface ( 26 ) de la paroi ( 28 ) extérieure du canal ( 18 ) d'écoulement et/ou la surface ( 36 ) de la paroi ( 32 ) intérieure du canal ( 18 ) d'écoulement comporte respectivement une partie dans laquelle l'une des surfaces ( 26, 36 ) de paroi ou les deux surfaces ( 26, 36 ) de paroi n'est pas ou ne sont pas de révolution.

14. Turbomachine axiale ayant un agencement suivant l'une des revendications 8 à 13.

15. Turbomachine axiale suivant la revendication 14, constituée en compresseur ( 13 ) d'une turbine ( 10 ) à gaz fixe de manière à ce que la sortie ( 12 ) du compresseur soit constituée en agencement suivant le préambule de la revendication 9, à laquelle se raccorde directement comme diffuseur de sortie le diffuseur ( 14 ) annulaire suivant l'une des revendications 1 à 7.
